(19) Europäisches Patentamt / European Patent Office / Office européen des brevets

(11) **EP 2 658 915 B1**

(12) **EUROPEAN PATENT SPECIFICATION**

(45) Date of publication and mention
of the grant of the patent:
**05.07.2017 Bulletin 2017/27**

(21) Application number: **11810747.3**

(22) Date of filing: **21.12.2011**

(51) Int Cl.:
***C08L 23/00*** *(2006.01)*

(86) International application number:
**PCT/US2011/066382**

(87) International publication number:
**WO 2012/092052 (05.07.2012 Gazette 2012/27)**

(54) **POLYOLEFIN COMPOSITIONS**

POLYOLEFINZUSAMMENSETZUNGEN

COMPOSITIONS DE POLYOLÉFINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2010 EP 10382365**

(43) Date of publication of application:
**06.11.2013 Bulletin 2013/45**

(73) Proprietor: **Dow Global Technologies LLC
Midland, MI 48674 (US)**

(72) Inventors:
• **LLOP, Cosme
  E-08028 Barcelona (ES)**
• **WARCZOK, Justyna, A.
  E-43130 Tarragona Sant Salvador (ES)**
• **MARTINEZ, Laura
  E-43201 Reus (ES)**

(74) Representative: **Boult Wade Tennant
Verulam Gardens
70 Gray's Inn Road
London WC1X 8BT (GB)**

(56) References cited:
**EP-A1- 0 936 246      EP-A1- 2 233 520
WO-A2-02/00786**

**Description**

BACKGROUND OF THE INVENTION

1. Field of the Invention

This invention relates to polyolefin compositions. In one aspect the invention relates to polyolefin compositions comprising at least one olefin-based polymer without a hetero-atom, at least polymer with a hetero-atom, and at least one polyalkylene (PA) block/polyalkylene glycol (PAG) block polymer. In another aspect the invention relates to articles made from the polyolefin compositions while in yet another aspect, the invention relates to films made from the polyolefin compositions.

2. Description of the Related Art

Polyolefins have many desirable properties, e.g. light weight, durability, low cost, etc., that make them an attractive material of construction for many goods, e.g. films, fibers, molded articles and the like. However because of their nonpolar nature, polyolefins do not readily accept ink or paint. Most water-based inks and paints are polar in nature, and thus require a surface with some degree of polarity (typically expressed as surface energy, e.g., dynes per centimeter (dyne/cm), before it can adhere to the surface with any degree of desirable fastness.

This problem has been addressed from a number of different directions, both external and internal. One external solution, i.e., a solution that involves the surface modification of the article, is first to apply a primer to the surface. Many primer materials typically comprise a halogenated (or other polar group) containing polyolefin and an aromatic solvent, and while widely recognized as effective, primers are expensive, and their application is an extra step in the finishing of the polyolefin article.

Another effective external approach is to subject the surface of the polyolefin article to a physical or chemical treatment, such as etching with a chemical abrasive or irradiating with plasma. While generally effective, these methods are more complex in nature than the application of a primer, and thus more difficult to control in terms of quality and consistency from article to article.

Internal solutions, i.e., solutions that involve the modification of the physical and/or chemical properties of the polyolefin, include blending the polyolefin with another polymer, typically a polymer comprising polar groups, or by incorporating into the polyolefin one or more polar groups, or both. Many examples of such solutions exist including those described in the following: USP 4,251,584, 4,888,391, 4,945,005, 4,946,896 and 6,093,496 and WO 97/22655, 2001/058987, 2002/042530, 2006/0189735, 2006/217490 and 2008/034716.

Of continuing interest to the polyolefin community is an internal solution that increases the surface energy of a polyolefin article for a prolonged period of time, e.g., months, without the need for an external assist, e.g., a primer, corona treatment, etc., and without any significant reduction in optical and/or mechanical properties of the article.

SUMMARY OF THE INVENTION

In one embodiment the invention is a composition comprising at least the following:

A. 95-99.5 wt% based on the weight of the composition (exclusive of the weight for any additives and/or fillers present) of an olefin-based polymer;
B. a polymer formed from at least one monomer comprising at least one hetero-atom, or modified by at least one agent comprising at least one hetero-atom; and
C. a polyalkylene (PA)block-polyalkylene glycol (PAG)block polymer.

wherein A, B and C are separate and distinct from each other.

In one embodiment the invention is an article made from the inventive composition. In one embodiment the article is a film.

DETAILED DESCRIPTION OF THE PREFERRED EMBODIMENT

*Overview*

In one aspect the invention relates to the surface modification of olefinic films. The modification is an internal modification, i.e., the surface energy of the film is modified by blending or mixing with an olefin-based polymer (sometimes referred to herein as the Component A polymer or, simply, Component A) at least one polymer formed from at least one monomer comprising at least one hetero-atom, or a polymer modified by at lest one agent comprising at least one hetero-atom (sometimes referred to herein as the Component B polymer or, simply, Component B), and at least one polyalkylene (PA) block/polyalkylene glycol (PAG) block polymer, i.e., (PA)block-(PAG)block polymer (sometimes referred to herein as the Component C polymer or, simply, Component C).

The olefin-based polymer, e.g., a polyethylene or polypropylene, admixed with just a Component B polymer, e.g., a functional polymer or specialty copolymer such as a maleic anhydride (MAH) grafted polyethylene (MAH-g-PE) or ethylene vinyl alcohol (EVOH), or with just a Component C polymer, e.g., a polyethylene block-polyethylene glycol block ((PE)block-(PEG)block) oligomer, provides little, if any, improvement in the wetting tension of the film surface over the olefin-based polymer alone. However, if the olefin-based polymer is admixed with both the Component B and C polymers, the wetting tension of the film surface is improved significantly and, in certain embodiments, actually improves over time, e.g., a month or more from the fabrication of the film. For example, the addition of Component B and C polymers to linear low density polyethylene (LLDPE) can increase the film surface energy from less than (<) 0.034 N/m to 0.037, or 0.038, or 0.039, or 0.040, or 0.041, or 0.042 or more N/m (34 dyne/cm to 37, or 38, or 39, or 40, or 41, or 42 or more dyne/cm) with a permanence of over three months. The optical and mechanical properties of the film are more than adequate for many packaging, including food packaging, applications.

Moreover, other properties of the film can experience improvement over a film made from a composition alike in all manner except for the presence of the Component B and C polymers. These other properties include hydrophilicity, printing, adhesion and dyeability.

*Component A*

The olefin-based polymers of Component A used in the practice of this invention contain only carbon and hydrogen atoms. These polymers do not contain any hetero-atoms, e.g., any atom (other than carbon or hydrogen) or functional group such as halogen, hydroxyl, carboxyl, ether, ester, amide, mercaptan and the like, that could impart a dipole or multipole moment to an otherwise neutral or near neutral hydrocarbon compound. These polymers are film-forming polymers, and typical of these polymers are the ethylene-based polymers and the propylene-based polymers. These polymers can be random, non-random or block.

The ethylene-based polymers include, but are not limited to, polyethylene homopolymer and ethylene-based interpolymers. Ethylene-based interpolymers include ethylene/alpha-olefin interpolymers and preferably copolymers, in which the alpha-olefin is typically a $C_3$-$C_{20}$ linear, branched or cyclic alpha-olefin such as, for example, propene, 1-butene, 4-methyl-1-pentene, 1-hexene, 1-octene, 1-decene, 1-dodecene, 1-tetradecene, 1-hexadecene, and 1-octadecene, and preferably propylene, 1-butene, 1-hexene and 1-octene.

The alpha-olefin can also contain a cyclic structure such as cyclohexane or cyclopentane, resulting in an alpha-olefin such as 3-cyclohexyl-1-propene (allyl cyclohexane) and vinyl cyclohexane. Although not an alpha-olefin in the classical sense of the term, for purposes of this invention certain cyclic olefins, such as norbornene and related olefins, are alpha-olefins and can be used in place of some or all of the alpha-olefins described above. Illustrative copolymers include ethylene/propylene copolymer, ethylene/butene copolymer, ethylene/hexene copolymer, and ethylene/1-octene copolymer. Illustrative terpolymers include ethylene/propylene/1-octene, ethylene/propylene/1-butene, ethylene/1-butene/1-octene, and ethylene/1-butene/styrene. Similar interpolymers and preferably copolymers exist for propylene-based polymers except ethylene replaces propylene as the alpha-olefin comonomer (for purposes of this invention, ethylene is considered an alpha-olefin). Blends of any of the above polymers can also be used in the practice of this invention as component (A) of the inventive composition.

Representative examples of ethylene-based interpolymers that can be used as component (A) of the compositions of this invention include low density polyethylene (LDPE), linear low density polyethylene (LLDPE) (e.g., DOWLEX copolymers available from The Dow Chemical Company (TDCC), medium density polyethylene (MDPE), high density polyethylene (HDPE), ultra low density polyethylene (ULDPE) (e.g., ATTANE ethylene/1-octene polyethylene available from TDCC), homogeneously branched, linear ethylene/alpha-olefin copolymers (e.g. TAFMER polymers available from Mitsui Petrochemicals Company Limited and EXACT polymers available from Exxon Chemical Company), homogeneously branched, substantially linear ethylene/alpha-olefin polymers (e.g. AFFINITY and ENGAGE polymers available from TDCC), and ethylene multi-block copolymers (e.g., INFUSE copolymers available from TDCC).

In one embodiment, the ethylene-based polymers used in the practice of this invention have a melt index (MI, $I_2$) typically from 0.1 to 50, more typically from 0.2 to 20 and even more typically from 0.5 to 6, grams per 10 minutes (g/10 min) as measured in accordance with ASTM D-1238-04, Condition 190°C/2.16 kilograms (kg)

In one embodiment, the ethylene-based polymers used in the practice of this invention have a density typically from 0.850 to 0.970, more typically from 0.860 to 0.960 more even typically from 0.87 to 0.950, grams per cubic centimeter (g/cm$^3$) as measured in accordance with ASTM D-792.

In one embodiment, the ethylene-based polymers used in the practice of this invention have a density typically from 0.890 to 0.950, more typically from 0.900 to 0.940 and even more typically from 0.910 to 0.930, g/cm$^3$ as measured

in accordance with ASTM D-792.

In one embodiment the ethylene-based polymer may comprise a combination of two or more ethylene-based polymer embodiments as described herein.

The propylene-based polymers that can be used as component (A) of the compositions of this invention include polypropylene homopolymers and propylene-based interpolymers and preferably propylene-based copolymers. The polypropylene homopolymers are generally in the isotactic form although other forms of polypropylene can be used (e.g., syndiotactic or atactic). Other suitable polypropylenes include branched polypropylene homopolymers and branched copolymers of polypropylene. Examples of polypropylene polymers useful in the practice of this invention include INSPIRE polymers available from The Dow Chemical Company.

In one embodiment the propylene-based polymers used in the practice of this invention have a melt flow ratio (MFR) typically from 0.1 to 50, more typically from 0.15 to 20 and even more typically from 0.2 to 10, g/10 min as measured in accordance with ASTM D-1238-04, Condition 230°C/2.16kg.

In one embodiment the propylene-based polymers used in the practice of this invention have a density typically from 0.860 to 0.900, g/cm$^3$ as measured in accordance with ASTM D-792.

In one embodiment the propylene-based polymer may comprise a combination of two or more propylene-based polymer embodiments as described herein.

The amount of Component A olefin-based polymer in the composition of this invention is typically at least 90, more typically at least 95 and even more typically at least 97, weight percent based on the weight of the composition.

*Component B*

The Component B polymers used in the practice of this invention are formed from at least one monomer or agent (e.g., a grafting compound such as maleic anhydride) comprising at least one hetero-atom or group containing a hetero-atom, e.g., halogen, hydroxyl, carboxyl, ether, ester, amide, mercaptan and the like, i.e., a atom or group that can impart a dipole or multipole moment to an otherwise neutral or near neutral hydrocarbon compound. Representative Component B polymers include, but are not limited to, polyalkylene glycols (PAG) and graft-modified or functionalized polymers. The Component B polymer may comprise a combination of two or more Component B polymer embodiments as described herein.

*Polyalkylene Glycol*

In one embodiment of the invention, polyalkylene glycols are used for Component B. PAG are made by the polymerization of an alkylene oxide monomer or a mixture of alkylene oxide monomers initiated by one or more of water and a mono-, di- or polyhydric compound, and promoted by a base catalyst under reactive conditions known in the art (see, for example, "Alkylene Oxides and Their Polymers", Surfactant Science Series, Vol 35). Upon the completion of the polymerization, the reaction mixture is vented and then neutralized by the addition of one or more acids. Optionally, the salts resulting from the neutralization can be removed by any known means. The neutralized polyalkylene glycol product has a pH value of 4.0 to 8.5. Polyalkylene glycols are polar polymers and specifically include polyethylene glycol and polypropylene glycol.

In one embodiment the initiator used in the preparation of the polyalkylene glycol is ethylene or propylene glycol or an oligomer of one of them. In one embodiment, the initiator is a compound of Formula 2

$$R^1O\text{-}(CHR^2CH_2O)_p\text{-}R^3 \qquad (2)$$

in which $R^1$ and $R^3$ are independently a $C_1$ to $C_{20}$ aliphatic or aromatic group with a linear or branched structure and which may contain one or more unsaturated bonds, or hydrogen, with the proviso that at least one of $R^1$ and $R^3$ is hydrogen; each $R^2$ is independently hydrogen, methyl, or ethyl; and p is an integer of 0 to 20. In one embodiment the starter compound is a hydrocarbon compound containing 3 or more hydroxyl groups, such as glycerol or sorbitol.

In one embodiment, the catalyst is a base, typically at least one of an alkali or alkaline earth metal hydroxide or carbonate, aliphatic amine, aromatic amine, or a heterocyclic amine. In one embodiment, sodium or potassium hydroxide is the base catalyst.

The alkylene oxide used as the monomer in the polymerization is a $C_2$ to $C_8$ oxide, such as ethylene oxide, propylene oxide, butylene oxide, hexene oxide, or octene oxide. In one embodiment, the alkylene oxide is ethylene or propylene oxide.

In one embodiment of this invention the polyalkylene oxide is polyethylene oxide, or a water soluble copolymer of ethylene oxide (EO) and propylene oxide (PO), or a mono methyl, ethyl, propyl, or butyl ether of one of them, or a polyethylene oxide or a copolymer of EO and PO initiated by glycerol.

*Graft-Modified and Functionalized Polymers*

In one embodiment, graft-modified and/or functionalized polymers can be used as the Component B polymer in the practice of this invention. These polymers include, without limitation, graft-modified olefin-based polymers (e.g., MAH-g-PE, MAH-g-polypropylene), ethylene vinyl acetate (EVA) interpolymer, ethylene acrylic acid (EAA) interpolymer, ethylene ethyl acetate (EEA) interpolymer, ethylene vinyl alcohol copolymer (EVOH), ethylene methacrylic acid interpolymer, ethylene methacrylic acid ionomer, polycarbonate, polyurethane, polyamide, polylactic acid, polyether block copolymer (e.g., PEBAX available from Arkema), copolyester polymer, polyester/polyether block polymers (e.g., HYTEL available from DuPont), olefin carbon monoxide interpolymer (e.g., ethylene-based carbon monoxide copolymer (ECO), propylene-based carbon monoxide copolymer (PCO)), ethylene/acrylic acid/carbon monoxide (EAACO) terpolymer, ethylene/methacrylic acid/carbon monoxide (EMAACO) terpolymer, ethylene/vinyl acetate/carbon monoxide terpolymer (EVACO), styrene/carbon monoxide (SCO) copolymer, polyethylene terephthalate (PET), chlorinated polyethylene, and mixtures of two or more of these polymers.

Suitable graft-modified polymers include the various ethylene and propylene polymers bearing a maleic anhydride and/or another carbonyl-containing, ethylenically unsaturated organic radical. Representative graft-modified polymers are described in USP 5,883,188, such as a homogeneously branched ethylene polymer graft-modified with maleic anhydride.

Suitable polylactic acid (PLA) polymers are well known in the literature (e.g., see D. M. Bigg et al., "Effect of Copolymer Ratio on the Crystallinity and Properties of Polylactic Acid Copolymers", ANTEC '96, pp. 2028-2039; WO 90/01521; EP 0 515203A and EP 0 748 846 A2). Suitable polylactic acid polymers are commercially available from Cargill Dow under the designation EcoPLA.

Suitable thermoplastic polyurethane polymers include those that commercially available from Lubrizol under the designation PELLETHANE.

Suitable polyolefin carbon monoxide interpolymers can be manufactured using well known high pressure free-radical polymerization methods. However, they may also be manufactured using traditional Ziegler-Natta catalysis, or with the use of so-called homogeneous catalyst systems as are known in the art.

Suitable free-radical initiated high pressure carbonyl-containing ethylene polymers such as ethylene acrylic acid interpolymers can be manufactured by any technique known in the art including the methods taught in USP 3,520,861, 4,988,781; 4,599,392 and 5,384,373.

Suitable ethylene vinyl acetate interpolymers are commercially available from various suppliers, including Exxon Chemical Company and Du Pont Chemical Company.

Suitable ethylene/alkyl acrylate interpolymers are commercially available from various suppliers. Suitable ethylene/acrylic acid interpolymers are commercially available from The Dow Chemical Company under the designation PRIMACOR. Suitable ethylene/methacrylic acid interpolymers for use as blend polymers in the practice of this invention are commercially available from Du Pont Chemical Company under the designation NUCREL.

Chlorinated polyethylene (CPE), especially chlorinated substantially linear ethylene polymers, can be prepared by chlorinating polyethylene in accordance with well known techniques. Preferably, chlorinated polyethylene comprises equal to or greater than 30 weight percent chlorine. Suitable chlorinated polyethylenes are commercially available from The Dow Chemical Company under the trade designation TYRIN.

*Component C*

In one embodiment Component C is a (PA)block-(PAG)block polymer wherein (PA)block refers to a polyalkylene block such as polyethylene or polypropylene, and (PAG)block refers to an oxyalkylene block such as oxyethylene block, oxypropylene block, or oxyethylenepropylene block. In one embodiment the (PA)block-(PAG)block polymer of Component C is represented by the structure of Formula 1:

$$R_1\text{-(A) n-(OA)m-}OR_2, \qquad (1)$$

wherein

OA   is an oxyalkylene block,
A   is an alkylene block,
$R_1$   is hydrogen or an alkyl group,
$R_2$   is hydrogen or an alkyl group,
m   is 4-220, and
n   is 4-220.

Representative OA blocks include but are not limited to - CH2CH2O-, -CH2CH(CH3)O-, -CH2CH2CH2CH(CH3)O-, and - CH2CH(CH3)CH2CH2O-. Representative A blocks include but are not limited to -CH2CH2-, -CH2CH2-, -CH2CH(CH3)-, - H2CH2CH2CH(CH3)-, and -CH2CH(CH3)CH2CH2-. The alkyl groups of each of $R_1$ and $R_2$ include but are not limited to $C_1$-$C_5$, or $C_1$-$C_3$, alkyls such as methyl, ethyl and propyl. $R_1$ is preferably $C_1$-$C_3$ alkyl, and $R_2$ is preferably hydrogen. The values of m include 4-220, 5-100 and 15-40. The values of n include 4-220, 10-100 and 30-50. Then values of m and n are each determined by dividing the weight average molecular weight (Mw) of the Component C polymer with the molecular weight of the respective monomeric repeat unit, and rounding the quotient to the closest whole number.

In one embodiment the PA(block)-(PAG)block polymer has a viscosity from 0.03 to 1.5 Pa.S (30 to 1,500 centiPoise) (cP)). In one embodiment the PA(block)-PAG has a melting point (Tm) from 70 to 110°C as measured by ASTM D-127. Representative commercially available Component C polymers that can be used in the practice of this invention include, without limitation, ethoxylated alcohols such as UNITHOX ethoxylates available from Baker Hughes.

*Inventive Compositions*

The maximum amount of Component A in the composition of this invention is not in excess of 99.5, more typically not in excess of 99 and even more typically not in excess of 98.5, weight percent based on the weight of the composition (exclusive of the weight for any additives and/or fillers present). The minimum amount of polar polymer in the composition of this invention is not less than 95, more typically not less than 96 and even more typically not less than 97, weight percent based on the weight of the composition (exclusive of the weight for any additives and/or fillers present).

In one embodiment of the invention the maximum amount of Component B in the composition of this invention is not in excess of 3 and even more typically not in excess of 2, weight percent based on the weight of the composition (exclusive of the weight for any additives and/or fillers present). The minimum amount of Component B in the composition of this invention is not less than 0.1, more typically not less than 0.3 and even more typically not less than 0.5, weight percent based on the weight of the composition (exclusive of the weight for any additives and/or fillers present).

The maximum amount of Component C in the composition of this invention is not in excess of 3, more typically not in excess of 2 and even more typically not in excess of 1, weight percent based on the weight of the composition (exclusive of the weight for any additives and/or fillers present). The minimum amount of polar oligomer in the composition of this invention is not less than 0.05, more typically not less than 0.1 and even more typically not less than 0.2, weight percent based on the weight of the composition (exclusive of the weight for any additives and/or fillers present).

In one embodiment the weight ratio of Component A to Component B in the composition of this invention is 95 to 5, or 96 to 4, or 97 to 3, or 98 to 2, or 99 to 1, or 99.5 to 0.5.

In one embodiment the weight ratio of Component A to Component C in the composition of this invention is 98 to 2, or 99 to 1, or 99.2 to 0.8, or 99.4 to 0.6, or 99.6 to 0.4, or 99.8 to 0.2.

The compositions of this invention are prepared using know protocols and equipment. The various components can be blended with one another in any order or simultaneously using one or more of standard mixing equipment, e.g., BUSS kneader, or the mixing compartments of an extruder. Component B and/or Component C can be incorporated into a masterbatch that is subsequently blended with the base or matrix olefin-based polymer (Component A). The conditions of mixing are typically ambient, e.g., room temperature and atmospheric pressure, but reduced or elevated pressure can be employed as well as reduced or elevated temperatures. The components are typically and preferably mixed until an essentially homogeneous blend is obtained.

The compositions of this invention can include one or more additives and/or fillers. These additives and fillers are used in known amounts and in known ways. Additives are typically used in amount of less than 10, typically less than 5 and often less than 2, weight percent (wt%) based on the weight of the composition (i.e., the combined weights of Components A, B and C). If present, filler, e.g., talc, calcium carbonate, silica, etc., can be used in amounts much in excess of 10 wt%, such as 20, or 30, or 40, or 50 wt% or more based on the weight of the composition (i.e., the combined weights of Components A, B and C). The additives can be added neat or as part of a masterbatch.

In one embodiment the compositions include one or more processing aids, such as a plasticizer. These aids include, but are not limited to, the phthalates, such as dioctyl phthalate and diisobutyl phthalate, natural oils such as lanolin, and paraffin, naphthenic and aromatic oils obtained from petroleum refining, and liquid resins from rosin or petroleum feedstocks. Exemplary oils useful as processing aids include white mineral oil such as KAYDOL oil (Chemtura Corp.; Middlebury, Conn.), SHELLFLEX 371 naphthenic oil (Shell Lubricants; Houston, Tex.), and TUFFLO oil (Lyondell Lubricants; Houston, Tex).

In one embodiment the composition includes one or more stabilizers, for example, antioxidants, such as IRGANOX 1010 and IRGAFOS 168 (Ciba Specialty Chemicals; Glattbrugg, Switzerland). In general, the polymeric composition is treated with one or more stabilizers before an extrusion or other melt process. Other stabilizers include, but are not limited to, ultraviolet light absorbers.

An inventive composition may comprise a combination of two or more embodiments as described herein.

*Uses*

The compositions of this invention can be employed in a variety of conventional thermoplastic fabrication processes to produce useful articles, including objects comprising at least one film layer, such as a monolayer film, or at least one layer in a multilayer film prepared by cast, blown, calendered, or extrusion coating processes; molded articles, such as blow molded, injection molded, or rotomolded articles; extrusions; fibers; and woven or nonwoven fabrics. Thermoplastic compositions comprising the compositions of this invention include blends with other natural or synthetic materials, polymers, additives, reinforcing agents, ignition resistant additives, antioxidants, stabilizers, colorants, extenders, crosslinkers, blowing agents, and plasticizers.

The compositions of this invention can be used in a variety of films, including but not limited to clarity shrink films, collation shrink films, cast stretch films, silage films, stretch hood, sealants, and diaper backsheets. In one embodiment films made from the compositions of this invention exhibit a surface energy greater than 0.034, or 0.035, or 0.036, or 0.037, or 0.038, or 0.039, or 0.040, or 0.041, or 0.042 or more, N/m (34, or 35, or 36, or 37, or 38, or 39, or 40, or 41, or 42 or more, dyne/cm) as measured by ASTM D 2578-04a. This surface energy is without an external modification of the surface using such techniques as the application of a primer or exposure to plasma. This surface energy allows the surface of film or article to receive and hold water-based inks and paints much more effectively than an film or article alike in all aspects other than the presence of both the polar polymer and polymer oligomer.

The compositions of this invention can be used in producing fibers for other applications. Fibers that may be prepared include staple fibers, tow, multi-component, sheath/core, twisted, and monofilament. Suitable fiber forming processes include spin bonded, melt blown techniques, as disclosed in USP 4,340,563, 4,663,220, 4,668,566, and 4,322,027, gel spun fibers as disclosed in USP 4,413,110, woven and nonwoven fabrics, as disclosed in USP 3,485,706, or structures made from such fibers, including blends with other fibers, such as polyester, nylon or cotton, thermoformed articles, extruded shapes, including profile extrusions and co-extrusions, calendared articles, and drawn, twisted, or crimped yarns or fibers.

The compositions of this invention are useful in other direct end-use applications such as wire and cable coating operations, in sheet extrusion for vacuum forming operations, and forming molded articles, including the use of injection molding, blow molding process, or rotomolding processes. The inventive compositions can also be formed into fabricated articles using conventional polyolefin processing techniques.

Other suitable applications for the compositions of this invention include elastic films and fibers; soft touch goods, such as tooth brush handles and appliance handles; gaskets and profiles; adhesives (including hot melt adhesives and pressure sensitive adhesives);

footwear (including shoe soles and shoe liners); auto interior parts and profiles; foam goods (both open and closed cell); impact modifiers for other thermoplastic polymers such as high density polyethylene, isotactic polypropylene, or other olefin polymers; coated fabrics; hoses; tubing; weather stripping; cap liners; flooring; and viscosity index modifiers, also known as pour point modifiers, for lubricants.

*Embodiments of the Invention*

In one embodiment the inventive composition comprises at least the following:

A. 95-99.5 wt% based on the weight of the composition (exclusive of the weight for any additives and/or fillers) of an olefin-based polymer;
B. a polymer formed from at least one monomer comprising at least one hetero-atom, or modified by at least one agent comprising at least one hetero-atom; and
C. a polyalkylene (PA)block-polyalkylene glycol (PAG)block polymer.

wherein A, B and C are separate and distinct from each other.

In one embodiment the (PA)block-(PAG)block polymer of Component C is represented by the structure of Formula 1 :

$$R_1\text{-}(A)\,n\text{-}(OA)m\text{-}OR_2, \qquad (1)$$

wherein

$OA$     is an oxyalkylene block,
$A$     is an alkylene block,
$R_1$     is hydrogen or an alkyl group,
$R_2$     is hydrogen or an alkyl group,

m      is 4-220, and
n      is 4-220.

In one embodiment the alkylene block (A) of Formula 1 is one or more of -CH2CH2-, -CH2CH2-, -CH2CH(CH3)-, - H2CH2CH2CH(CH3)-, or -CH2CH(CH3)CH2CH2-.

In one embodiment the oxyalkylene block (OA) of Formula 1 is one or more of -CH2CH2O- -CH2CH(CH3)O-,-CH2CH2CH2CH(CH3)O-, or -CH2CH(CH3)CH2CH2O-.

In one embodiment the oxyalkylene block (OA) of Formula 1 is one or more of oxyethylene, oxypropylene or oxyethylenepropylene.

In one embodiment $R_1$ of Formula 1 is hydrogen or a $C_1$-$C_5$, preferably a $C_1$-$C_3$, alkyl group.

In one embodiment $R_2$ of Formula 1 is hydrogen or a $C_1$-$C_5$, or $C_1$-$C_3$, alkyl group, preferably hydrogen or a methyl group, more preferably hydrogen.

In one embodiment m of Formula 1 is an average repeat group of 5-220, or 5-100, or 15-40.

In one embodiment n of Formula 1 is an average repeat group of 5-220, or 10-100, or 30-50.

In one embodiment Component C has a melting point (Tm) from 70 to 110°C as determined by ASTM D-127.

In one embodiment Component C may comprise a combination of two or more embodiments as described herein.

In one embodiment the olefin-based polymer of Component A is selected from polyethylene homopolymer, ethylene/alpha-olefin interpolymer, polypropylene homopolymer, propylene/ethylene interpolymer, and propylene/alpha-olefin interpolymer.

In one embodiment the olefin-based polymer of Component A is an ethylene-based polymer having a density from 0.900 to 0.950 g/cm$^3$.

In one embodiment the olefin-based polymer of Component A is an ethylene-based polymer having a melt index ($I_2$) from 0.1 to 50 g/10 min, or 0.2 to 20 g/10 min, or 0.5 to 6 g/10 min, all at 190°C/2.16kg.

In one embodiment the olefin-based polymer of Component A is a propylene-based polymer.

In one embodiment the propylene-based polymer of Component A has a density from 0.860 to 0.900 g/cm$^3$.

In one embodiment the propylene-based polymer of Component A has a melt flow rate (MFR) from 0.1 to 50 g/10 min, or 0.15 to 20 g/10 min, or 0.2 to 10 g/10 min, all at 230°C/2.16kg.

In one embodiment Component A may comprise a combination of two or more embodiments as described herein.

In one embodiment the polymer of Component B is at least one selected from graft-modified olefin-based polymers, ethylene vinyl acetate interpolymer, ethylene acrylic acid (EAA) interpolymer, ethylene ethyl acetate interpolymer, ethylene methacrylic acid interpolymer, ethylene methacrylic acid ionomer, polycarbonate, polyurethane, polyamide, polylactic acid, polyether block copolymer, copolyester polymer, polyester/polyether block polymers, olefin carbon monoxide interpolymer, ethylene/acrylic acid/carbon monoxide terpolymer, ethylene/methacrylic acid/carbon monoxide terpolymer, ethylene/vinyl acetate/carbon monoxide terpolymer, styrene/carbon monoxide copolymer, polyethylene terephthalate, chlorinated polyethylene, and mixtures of two or more of these polymers.

In one embodiment the polymer of Component B is one or more of EAA, ethylene-based carbon monoxide (ECO) copolymer, and MAH-g-PE.

In one embodiment the polymer of Component B is polyethylene glycol.

In one embodiment the polymer of Component B is polypropylene glycol.

In one embodiment Component B may comprise a combination of two or more embodiments as described herein.

In one embodiment the inventive composition of any of the preceding embodiments comprises one or more additives and/or fillers.

In one embodiment the invention is an article comprising at least one component formed from the inventive composition.

In one embodiment the inventive article is a film.

In one embodiment the inventive film is a monolayer film.

In one embodiment the inventive film comprises at least one layer formed from the inventive composition.

In one embodiment the inventive film comprises at least two layers, and at least one exterior layer of the film is formed from the inventive composition.

In one embodiment the inventive film comprises at least two layers, and each exterior layer of the film is formed from the inventive composition.

In one embodiment the exterior layers of the inventive film comprises from 5 to 20 percent, or from 8 to 17 percent, of the total film thickness.

In one embodiment the inventive film comprises at least one core layer formed from the inventive composition.

In one embodiment the film has a surface energy greater than 0.034, or 0.035, or 0.036, or 0.037, or 0.038, or 0.039, or 0.040, or 0.041 or 0.042 or more, N/m (34, or 35, or 36, or 37, or 38, or 39, or 40, or 41 or 42 or more, dyne/cm) without an external modification of the film surface.

In one embodiment the inventive film is not subject to an external surface treatment such as the application of a primer or exposure to plasma.

In one embodiment the inventive article is a molded article.

In one embodiment the inventive molded article is made by any one of blow molding, injection molding, or rotomolding.

In one embodiment the inventive article is in the form of a fiber.

*Definitions*

Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, etc., is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the density and relative amounts of the component polymers.

The term "composition," as here used means a combination of two or more materials. The compositions of this invention comprise at least three components, i.e., (A) an olefin-based polymer, (B) a polymer formed from at least one monomer comprising at least one hetero-atom, or modified by at least one agent comprising at least one hetero-atom, and (C) a (PA)block-(PAG)block polymer, each separate and distinct from the other.

The term "polymer" refers to a compound prepared by polymerizing monomers, whether of the same or a different type. The generic term polymer thus embraces the term homopolymer (which refers to polymers prepared from only one type of monomer with the understanding that trace amounts of impurities can be incorporated into the polymer structure), and the term "interpolymer" as defined *infra*.

The term "interpolymer" refers to a polymer prepared by the polymerization of at least two different types of monomers. The generic term interpolymer includes copolymers (which refers to polymers prepared from two different monomers), and polymers prepared from more than two different types of monomers.

The term "olefin" refers to an unsaturated hydrocarbon containing one or more pairs of carbon atoms linked by a double bond.

The term "olefin-based polymer" refers to a polymer that comprises a majority amount of polymerized olefin based on the weight of the polymer and, optionally, may comprise at least one comonomer.

The term "ethylene-based polymer" refers to a polymer that comprises a majority amount of polymerized ethylene based on the weight of the polymer and, optionally, may comprise at least one comonomer.

The term "ethylene-based interpolymer" refers to an interpolymer that comprises a majority amount of polymerized ethylene based on the weight of the interpolymer, and comprises at least one comonomer.

The term "hetero-atom" refers to an atom in a hydrocarbon molecule other than carbon or hydrogen. Typical hetero-atoms include, but are not limited to, nitrogen, oxygen, phosphorus, sulfur and various metals.

*Test Methods*

*Molecular Weight (Mw) Measurement by GPC*

The GPC system consists of a Waters (Milford, MA) 150°C high temperature chromatograph (other suitable high temperatures GPC instruments include Polymer Laboratories (Shropshire, UK) Model 210 and Model 220) equipped with an on-board differential refractometer (RI). Additional detectors can include an IR4 infra-red detector from Polymer ChAR (Valencia, Spain), Precision Detectors (Amherst, MA) 2-angle laser light scattering detector Model 2040, and a Viscotek (Houston, TX) 150R 4-capillary solution viscometer. A GPC with the last two independent detectors and at least one of the first detectors is sometimes referred to as "3D-GPC", while the term "GPC" alone generally refers to conventional GPC. Depending on the sample, either the 15-degree angle or the 90-degree angle of the light scattering detector is used for calculation purposes. Data collection is performed using Viscotek TriSEC software, Version 3, and a 4-channel Viscotek Data Manager DM400. The system is also equipped with an on-line solvent degassing device from Polymer Laboratories (Shropshire, UK). Suitable high temperature GPC columns can be used such as four 30 cm long

Shodex HT803 13 $\mu$m (micron) columns or four 30 cm Polymer Labs columns of 20-$\mu$m (micron) mixed-pore-size packing (MixA LS, Polymer Labs). The sample carousel compartment is operated at 140°C and the column compartment is operated at 150°C. The samples are prepared at a concentration of 0.1 grams of polymer in 50 milliliters of solvent. The chromatographic solvent and the sample preparation solvent contain 200 ppm of butylated hydroxytoluene (BHT). Both solvents are sparged with nitrogen. The polyethylene samples are gently stirred at 160°C for four hours. The injection volume is 200 microliters. The flow rate through the GPC is set at 1 ml/minute.

The GPC column set is calibrated by running twenty-one narrow molecular weight distribution polystyrene standards. The molecular weight (Mw) of the standards ranges from 580 to 8,400,000 grams per mole, and the standards are contained in 6 "cocktail" mixtures. Each standard mixture has at least a decade of separation between individual molecular weights. The standard mixtures are purchased from Polymer Laboratories (Shropshire, UK). The polystyrene standards are prepared at 0.025 g in 50 mL of solvent for molecular weights equal to or greater than 1,000,000 grams per mole and 0.05 g in 50 ml of solvent for molecular weights less than 1,000,000 grams per mole. The polystyrene standards were dissolved at 80°C with gentle agitation for 30 minutes. The narrow standards mixtures are run first and in order of decreasing highest molecular weight component to minimize degradation. The polystyrene standard peak molecular weights are converted to polyethylene molecular weight using the following equation (as described in Williams and Ward, J. Polym. Sci., Polym. Let., 6,621 (1968)):

$$M_{polyethylene} = A \ x \ (M_{polystyrene})^B$$

where M is the molecular weight of polyethylene or polystyrene (as marked), A has a value of 0.43, and B is equal to 1.0. Use of this polyethylene calibration to obtain molecular weight distributions and related statistics is defined as the method of Williams and Ward. Other values of A and B in the equation may result from different choices of the Mark-Houwink K and a (sometimes referred to as $\alpha$) values for polystyrene and polyethylene and are referred to generally as a conventionally calibrated 3D-GPC.

With 3D-GPC absolute weight average molecular weight ("$M_{w, Abs}$") and intrinsic viscosity are also obtained independently from suitable narrow polyethylene standards using the same conditions mentioned previously. These narrow linear polyethylene standards may be obtained from Polymer Laboratories (Shropshire, UK; Part No.'s PL2650-0101 and PL2650-0102).

The systematic approach for the determination of multi-detector offsets is performed in a manner consistent with that published by Balke, Mourey, et al. (Mourey and Balke, Chromatography Polym., Chapter 12, (1992)) (Balke, Thitiratsakul, Lew, Cheung, Mourey, Chromatography Polym., Chapter 13, (1992)), optimizing triple detector log (Mw and intrinsic viscosity) results from Dow 1683 broad polystyrene (American Polymer Standards Corp.; Mentor, OH) or its equivalent to the narrow standard column calibration results from the narrow polystyrene standards calibration curve. The molecular weight data, accounting for detector volume offset determination, are obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)). The overall injected concentration used in the determination of the molecular weight is obtained from the mass detector area and the mass detector constant derived from a suitable linear polyethylene homopolymer, or one of the polyethylene standards. The calculated molecular weights are obtained using a light scattering constant derived from one or more of the polyethylene standards mentioned and a refractive index concentration coefficient, dn/dc, of 0.104. Generally, the mass detector response and the light scattering constant should be determined from a linear standard with a molecular weight in excess of 50,000 daltons. The viscometer calibration can be accomplished using the methods described by the manufacturer or alternatively by using the published values of suitable linear standards such as Standard Reference Materials (SRM) 1475a, 1482a, 1483, or 1484a. The chromatographic concentrations are assumed low enough to eliminate addressing 2nd viral coefficient effects (concentration effects on molecular weight).

*Density*

Density is measured by ASTM D 792.

*Melt Index ($I_2$)*

Melt index or $I_2$ is measured by ASTM D 1238 (190°C/2.16kg).

*Melt Flow Rate*

Melt flow rate (MFR) is measured by ASTM D 1238 (230°C/2.16kg).

*Surface Energy*

Surface energy is measured by ASTM D 2578-04a.

*Haze*

Haze is measured by ISO 14782.

*Gloss 45°*

Gloss 45° is measured by ISO 1133.

*Tensile*

Tensile is measured by ISO 527-3.

The following examples are provided as a further illustration of the invention. Unless otherwise stated, all parts and percentages are by weight.

SPECIFIC EMBODIMENTS

*Example 1*

*Materials*

Component A is EO-45G, a linear low density polyethylene with octene as the comonomer and having a density of 0.9180-0.9220 g/cm$^3$ measured by ASTM D792, a melt index of 0.85-1.15 dg/min measured by ASTM D1238 (190°C/2.16kg).

Component B is EO-07, a maleic anhydride grafted polyethylene (MAH-g-PE) with a maleic anhydride target level of 0.12 wt%, a density within the range of 0.921 to 0.925 g/cm$^3$ measured by ASTM D792, average melt index of 2.1 dg/min measured by ASTM D1238.

Component C is polyethylene block polyethylene glycol UNITHOX 550 from Baker Hughes. It has a molecular weight of approximately 1,100, an ethylene oxide loading of 50 wt%, a Hydrophilic-Lipophilic Balance (HLB) value of 10, and a melting point of 99°C.

*Composition*

A 5% masterbatch of UNITHOX 550 is prepared using EO-45G as the base resin. A BUSS kneader compounding unit is used for the masterbatch production (BUSS Kneader Compounder MDK/E46 (Buss AG, Switzerland)). The UNITHOX 5% masterbatch together with the EO-07 and the EO-45G are blended together using the BUSS kneader. The final composition of the compound after blending is reported in Table 1.

Table 1

| Test Composition of Example 1 | |
|---|---|
| **Component** | **Wt%** |
| **EO-45G** | **98.8** |
| **EO-07** | **1.0** |
| **UNITHOX 550** | **0.2** |

*Film*

The composition is extruded into a monolayer film using a Collin blown film extruder. As a reference a 100% EO-45G polymer from the same production lot of that used in the composition is extruded at the same time and under the same conditions as that of the composition.

Films are produced in a Collin monolayer blown film line extruder (Dr. Collin GmbH, Ebersberg, Germany). This line has an extruder size of 30 millimeters (mm), a die size of 60 mm and a die gap of 0.6 mm. The film samples are produced with an average thickness of 50 $\mu$m (microns), with a 2.5 blow-up-ratio and an output rate of about 6 kilograms per hour (kg/h).

*Tests and Test Results*

Films are tested for a number of physical variables. Surface energy is measured using the corona treatment dyne pens on the range of 0.034 to 0.039 N/m (34 to 49 dynes/cm) following ASTM D2578-04a. As stated in this standard, two test results should be judged not equivalent if they differ by more than 0.00106 N/m (1.06 dyne/cm) for a 0.03307 N/m (33.07 dyne/cm) treatment level or by more than 0.0009 N/m (0.90 dyne/cm) for a 0.03627 N/m (36.27 dyne/cm) treatment level. Measurements are done 1, 7 and 30 days after extrusion. Results are reported in Table 2. Comparative Example 1A film was formed from EO-45G using the same film conditions as discussed above.

Table 2

| Surface Energy Results of Example 1 | | | |
|---|---|---|---|
| | Surface energy (N/m) ((dyne/cm)) | | |
| Sample | Day 1 | Day 7 | Day 30 |
| EO-045G | < 0.034 (34) | < 0.034 (34) | < 0.034 (34) |
| EO-45G +EO-07 + UNITHOX 550 | 0.037 (37) | 0.040 (40) | 0.042 (42) |

The data of Table 2 shows that the films made from the inventive composition have a higher surface energy and that this surface energy builds over time. Higher surface energy provides better print receptivity, adhesion to polar surfaces, and better anti-static properties.

Optical properties, haze and gloss 45°, are measured on the films following standard procedures (haze following ISO 14782 and Gloss 45° following ISO 1133). The results are reported in Table 3.

Table 3

| Haze and Gloss 45° Results of Example 1 | | | | | | |
|---|---|---|---|---|---|---|
| | Haze | | | Gloss 45° | | |
| Sample | Day 1 | Day 7 | Day 30 | Day 1 | Day 7 | Day 30 |
| EO-045G | 12.8 | 12.6 | 12.7 | 53.1 | 54.4 | 55.2 |
| EO-45G +EO-07 + UNITHOX 550 | 10.6 | 10.5 | 10.9 | 61.9 | 63.7 | 62.4 |

The films made from the inventive compositions exhibit increase gloss and decreased haze as compared to the comparative film.

Mechanical properties of the films are measured (i.e. tensile testing following ISO 527-3) and no significant drop in mechanical properties of the compound versus the control is found. The mechanical properties are reported in Table 4.

Table 4

| Mechanical Testing Results Example 1 | | | | |
|---|---|---|---|---|
| | Tensile Strength (MPa) | | Strain a Break (°/0) | |
| Sample | Machine direction | cross direction | Machine direction | cross direction |
| EO-045G | 33.5 | 33.7 | 644 | 663 |
| EO-45G +EO-07 + UNITHOX 550 | 31.9 | 28.6 | 623 | 635 |

*Comparative Example 1A*

Example 1 is repeated except that ELASTAMINE RE1-2007 polyetheramine is substituted for UNITHOX 550 as Component C. ELASTAMINE RE1-2007 is available from Huntsman, and it is a mono-etheramine. It has a density of 1.072 $g/cm^3$ and a melting point of 17°C. Its molecular weight is 2000 g/mol with a ratio EO/PO 31/10 and a total amine content of 0.49 meq/g. The test results are measured as described in Example 1, and are reported in Tables 5-7.

Table 5

| Surface Energy Results of Comparative Example 1A | | | |
|---|---|---|---|
| | Surface energy (N/m) ((dyne/cm)) | | |
| Sample | Day 1 | Day 7 | Day 30 |
| EO-045G | < 0.034 (34) | < 0.034 (34) | < 0.034 (34) |
| EO-45G +EO-07 + ELASTAMINE RE1-2007 | < 0.034 (34) | < 0.034 (34) | < 0.034 (34) |

Table 6

| Haze and Gloss 45° Results of Comparative Example 1A | | | | | | |
|---|---|---|---|---|---|---|
| | **Haze** | | | **Gloss 45°** | | |
| **Sample** | **Day 1** | **Day 7** | **Day 30** | **Day 1** | **Day 7** | **Day 30** |
| **EO-045G** | **12.8** | **12.6** | **12.7** | **53.1** | **54.4** | **55.2** |
| **EO-45G +EO-07 + ELASTAMINE RE1-2007** | **8.6** | **8.3** | **8.8** | **66.8** | **68.0** | **69.0** |

Table 7

| Mechanical Testing Results of Comparative Example 1A | | | | |
|---|---|---|---|---|
| | Tensile Strength | | Strain a Break (°/0) | |
| Sample | Machine direction | cross direction | Machine direction | cross direction |
| EO-045G | 33.5 | 33.7 | 644 | 663 |
| EO-45G +EO-07 + ELASTAMINE RE1-2007 | 21.4 | 18.0 | 530 | 511 |

As is evident from the data reported in Tables 5-7, compositions comprising a polyetheramine as Component C preform poorly with respect to surface energy and mechanical strength relative to a composition the same in all respects except for Component C.

*Example 1C*

Example 1 is repeated except that UNITHOX 750 is substituted for UNITHOX 550. UNITHOX 750 is polyethylene block polyethylene glycol from Baker Hughes. It has a molecular weight of approximately 1,400, an ethylene oxide loading of 50 wt%, a Hydrophilic-Lipophilic Balance (HLB) value of 10, and a melting point of 106°C. The derived repeating unit for the oxyalkylene group, m, is about 16.

Sample preparation and film formation is as described in Example 1 of this letter. Table 12 reports the composition.

Table 8

| Test Composition of Example 1C | |
|---|---|
| **Component** | **Wt%** |
| **EO-45G** | **98.8** |
| **EO-07** | **1.0** |

(continued)

| Test Composition of Example 1C | |
|---|---|
| **Component** | **Wt%** |
| **UNITHOX 750** | **0.2** |

Surface energy, optical properties and mechanical testing results are reported in Tables 9 to 11. These properties are measured as in Example 1.

Table 9

| Surface Energy Results of Example 1C | | | |
|---|---|---|---|
| | Surface energy (N/m) ((dyne/cm)) | | |
| Sample | Day 1 | Day 7 | Day 30 |
| EO-45G +EO-07 + UNITHOX 550 | 0.034 (34) | 0.034 (34) | 0.036 (36) |
| EO-45G +EO-07 + UNITHOX 750 | < 0.034 (34) | < 0.034 (34) | 0.034-0.035 (34 - 35) |

Table 10

| Haze and Gloss 45° Results of Example 1C | | |
|---|---|---|
| **Sample** | **Haze** | **Gloss** |
| **EO-045G** | **12.4** | **56.9** |
| **EO-45G +EO-07 + UNITHOX 550** | **8.6** | **68.9** |
| **EO-45G +EO-07 + UNITHOX 750** | **9.6** | **66.0** |

Table 11

| Mechanical Testing Results of Example 1C | | | | |
|---|---|---|---|---|
| | Tensile Strength | | Strain a Break (°/0) | |
| Sample | Machine direction | cross direction | Machine direction | cross direction |
| EO-045G | 33.8 | 28.5 | 641 | 627 |
| EO-45G +EO-07 + UNITHOX 550 | 32.6 | 33.9 | 655 | 662 |
| EO-45G +EO-07 + UNITHOX 750 | 32.5 | 32.2 | 654 | 656 |

As the data of Tables 9-11 report, the substitution of UNITHOX 750 polymer for UNITHOX 550 in the inventive composition results in some modification of the surface energy but of lower amount than using UNITHOX 550. Optical and mechanical properties when using UNITHOX 750 are equal or slightly lower than when using UNITHOX 550.

*Example 2*

Example 1 is repeated except that ECO-110 is substituted for EO-07 as Component B. ECO-110 is an ethylene/carbon monoxide polymer with a carbon monoxide target level of 1.0 wt%, a density of 0.930 $g/cm^3$ measured by ASTM D792, and a melt index of 0.55 dg/min measured by the ASTM D1238. The test results are reported in Tables 12-14.

Table 12

| Surface Energy Results of Example 2 | | | |
|---|---|---|---|
| | Surface energy (N/m) ((dyne/cm)) | | |
| Sample | Day 1 | Day 7 | Day 30 |
| EO-045G | < 0.034 (34) | < 0.034 (34) | < 0.034 (34) |
| EO-45G +ECO-110 + UNITHOX 550 | 0.035 (35) | 0.040 (40) | 0.041 (41) |

Table 13

| Haze and Gloss 45° Results of Example 2 | | | | | | |
|---|---|---|---|---|---|---|
| | Haze | | | Gloss 45° | | |
| Sample | Day 1 | Day 7 | Day 30 | Day 1 | Day 7 | Day 30 |
| EO-045G | 12.8 | 12.6 | 12.7 | 53.1 | 54.4 | 55.2 |
| EO-45G+ECO-110 + UNITHOX 550 | 15.3 | 15.2 | 15.4 | 45.5 | 47.2 | 49.1 |

Table 14

| Mechanical Testing Results of Example 2 | | | | |
|---|---|---|---|---|
| | Tensile Strength (MPa) | | Strain a Break (°/0) | |
| Sample | Machine direction | cross direction | Machine direction | cross direction |
| EO-045G | 33.5 | 33.7 | 644 | 663 |
| EO-45G+ECO-110 + UNITHOX 550 | 33.7 | 32.0 | 640 | 653 |

As the data of Tables 12-14 shows, the substitution of an ECO polymer for a MAH-g-PE as the Component B in the inventive composition does not diminish the favorable surface energy and optic and mechanical properties of a film made from the composition.

*Comparative Example 2*

Example 1 is repeated except that Component C is omitted. EO-07 and EO-45G resins are blended together using a Buss kneader (Buss Kneader Compounder MDK/E46 (Buss AG, Switzerland). The test composition consisted of 98.0 wt% EO-45G and 2.0 wt% EO-07.

The composition is extruded into a monolayer film using a Collin cast film extruder. As a reference a 100% EO-45G from the same production lot of that used in the composition is extruded at the same time and under the same conditions than the compound.

Films are produced in a Collin monolayer cast film line extruder (Dr. Collin GmbH, Ebersberg, Germany). This line has an extruder size of 30 mm, a flat die size of 200 mm and a die gap of 0.7 mm. The film samples are produced with an average thickness of 50 $\mu$m.

Surface energy of the films are measured in the same manner as the previous examples. The results are reported in Table 23.

Table 15

| Surface Energy Results of Comparative Example 2 | | | |
|---|---|---|---|
| | Surface energy (N/m) ((dyne/cm)) | | |
| Sample | Day 1 | Day 7 | Day 30 |
| EO-045G | < 0.034 (34) | < 0.034 (34) | < 0.034 (34) |
| EO-45G +EO-07 | < 0.034 (34) | < 0.034 (34) | < 0.034 (34) |

The data of Table 15 shows that the addition of Component B to Component A and in the absence of Component C, produces no benefit to films made from the composition in terms of surface energy improvement over a film made from a composition of Component A alone.

## Claims

1. A composition comprising at least the following:

    A. 95-99.5 wt% based on the weight of the composition (exclusive of the weight for any additives and/or fillers present) of an olefin-based polymer;
    B. a polymer formed from at least one monomer comprising at least one hetero-atom, or modified by at least one agent comprising at least one hetero-atom; and
    C. a polyalkylene (PA)block-polyalkylene glycol (PAG)block polymer.

    wherein A, B and C are separate and distinct from each other.

2. The composition of Claim 1, wherein the (PA)block-(PAG)block polymer of Component C is represented by the following structure:

$$R_1- (A) n- (OA) m-OR_2,$$

    wherein

    OA is an oxyalkylene unit,
    A is an alkylene unit,
    $R_1$ is hydrogen or an alkyl group,
    $R_2$ is hydrogen or an alkyl group,
    m is 4-220, and
    n is 4-220.

3. The composition of Claim 1 or 2, wherein Component C has a melting point (Tm) from 70 to 110ºC as determined by ASTM D-127.

4. The composition of any of the preceding claims, wherein Component A is selected from polyethylene homopolymer, ethylene/alpha-olefin interpolymer, polypropylene homopolymer, propylene/ethylene interpolymer, or propylene/alpha-olefin interpolymer.

5. The composition of Claim 4, wherein the ethylene-based polymer of Component A has a density from 0.900 to 0.950 g/cm$^3$.

6. The composition of Claim 4 or Claim 5, wherein the ethylene-based polymer of Component A has a melt index ($I_2$) from 0.5 to 6 g/10 min (190C/2.16 kg).

7. The composition of Claim 1 or 2, wherein Component A is a propylene-based polymer.

8. The composition of Claim 7, wherein the propylene-based polymer of Component A has a density from 0.860 to 0.900 g/cm$^3$.

9. The composition of Claim 7 or 8, wherein the propylene-based polymer of Component A has a melt flow rate (MFR) from 0.2 to 10 g/10 min (230C/2.16 kg).

10. The composition of any of Claims 1-9, wherein the polymer of Component B is selected from polyalkylene glycols, graft-modified olefin-based polymers, ethylene vinyl acetate interpolymer, ethylene acrylic acid interpolymer, ethylene ethyl acetate interpolymer, ethylene methacrylic acid interpolymer, ethylene methacrylic acid ionomer, polycarbonate, polyurethane, polyamide, polylactic acid, polyether block copolymer, copolyester polymer, polyester/polyether block polymers, olefin carbon monoxide interpolymer, ethylene/acrylic acid/carbon monoxide terpolymer, ethylene/methacrylic acid/carbon monoxide terpolymer, ethylene/vinyl acetate/carbon monoxide terpolymer, styrene/carbon monoxide copolymer, polyethylene terephthalate, chlorinated polyethylene, and mixtures of two or more of these polymers.

11. An article comprising at least one component formed from the composition of any of Claims 1-10.

12. The article of Claim 11 in the form of a film.

13. The article of Claim 12 wherein the film comprises at least two layers, and wherein at least one exterior layer of the film is formed from the composition of any of Claims 1-10.

14. The article of Claim 12 or 13 wherein the film further comprises at least one core layer formed from a composition comprising a polymer selected from polyamide, polyester or polyolefin.

15. The article of any of Claims 11-14, wherein the article has a surface energy greater than or equal to 0.037 N/m (37 dyne/cm).


**Patentansprüche**

1. Eine Zusammensetzung, die mindestens Folgendes beinhaltet:

   A. bezogen auf das Gewicht der Zusammensetzung (ohne das Gewicht jeglicher vorhandener Zusätze und/oder Füllstoffe), zu 95-99,5 Gew.-% ein Polymer auf Olefinbasis;
   B. ein Polymer, gebildet aus mindestens einem Monomer, das mindestens ein Heteroatom beinhaltet, oder modifiziert durch mindestens ein Mittel, das mindestens ein Heteroatom beinhaltet; und
   C. ein Polyalkylen(PA)block-Polyalkylenglykol(PAG)block-Polymer,

   wobei A, B und C separat und voneinander verschieden sind.

2. Zusammensetzung gemäß Anspruch 1, wobei das (PA)Block-(PAG)Block-Polymer von Komponente C durch die folgende Struktur dargestellt wird:

   $$R_1\text{-}(A)n\text{-}(OA)m\text{-}OR_2,$$

   wobei

   OA eine Oxyalkyleneinheit ist,
   A eine Alkyleneinheit ist,
   $R_1$ Wasserstoff oder eine Alkylgruppe ist,
   $R_2$ Wasserstoff oder eine Alkylgruppe ist,
   m 4-220 ist und
   n 4-220 ist.

3. Zusammensetzung gemäß Anspruch 1 oder 2, wobei Komponente C einen Schmelzpunkt (Tm) von 70 bis 110 °C, wie durch ASTM D-127 bestimmt, aufweist.

4. Zusammensetzung gemäß einem der vorhergehenden Ansprüche, wobei Komponente A aus Folgendem ausgewählt ist: Polyethylen-Homopolymer, Ethylen/alpha-Olefin-Interpolymer, Polypropylen-Homopolymer, Propylen/Ethylen-Interpolymer oder Propylen/alpha-Olefin-Interpolymer.

5. Zusammensetzung gemäß Anspruch 4, wobei das Polymer auf Ethylenbasis von Komponente A eine Dichte von 0,900 bis 0,950 g/cm$^3$ aufweist.

6. Zusammensetzung gemäß Anspruch 4 oder Anspruch 5, wobei das Polymer auf Ethylenbasis von Komponente A einen Schmelzindex ($I_2$) von 0,5 bis 6 g/10 min (190 °C/2,16 kg) aufweist.

7. Zusammensetzung gemäß Anspruch 1 oder 2, wobei Komponente A ein Polymer auf Propylenbasis ist.

**8.** Zusammensetzung gemäß Anspruch 7, wobei das Polymer auf Propylenbasis von Komponente A eine Dichte von 0,860 bis 0,900 g/cm$^3$ aufweist.

**9.** Zusammensetzung gemäß Anspruch 7 oder 8, wobei das Polymer auf Propylenbasis von Komponente A eine Schmelzflussrate (MFR) von 0,2 bis 10 g/10 min (230 °C/2,16 kg) aufweist.

**10.** Zusammensetzung gemäß einem der Ansprüche 1-9, wobei das Polymer von Komponente B aus Folgendem ausgewählt ist: Polyalkylenglykolen, pfropfmodifizierten Polymeren auf Olefinbasis, Ethylen-Vinylacetat-Interpolymer, Ethylen-Acrylsäure-Interpolymer, Ethylen-Ethylacetat-Interpolymer, Ethylen-Methacrylsäure-Interpolymer, Ethylen-Methacrylsäure-Ionomer, Polycarbonat, Polyurethan, Polyamid, Polymilchsäure, Polyether-Blockcopolymer, Copolyesterpolymer, Polyester/Polyether-Blockpolymeren, Olefin-Kohlenstoffmonoxid-Interpolymer, Ethylen/Acrylsäure/Kohlenstoffmonoxid-Terpolymer, Ethylen/Methacrylsäure/Kohlenstoffmonoxid-Terpolymer, Ethylen/Vinylacetat/Kohlenstoffmonoxid-Terpolymer, Styrol/Kohlenstoffmonoxid-Copolymer, Polyethylenterephthalat, chloriertem Polyethylen und Mischungen von zwei oder mehr dieser Polymere.

**11.** Ein Artikel, beinhaltend mindestens eine Komponente, die aus der Zusammensetzung gemäß einem der Ansprüche 1-10 gebildet ist.

**12.** Artikel gemäß Anspruch 11 in der Form einer Folie.

**13.** Artikel gemäß Anspruch 12, wobei die Folie mindestens zwei Schichten beinhaltet und wobei mindestens eine äußere Schicht der Folie aus der Zusammensetzung gemäß einem der Ansprüche 1-10 gebildet ist.

**14.** Artikel gemäß Anspruch 12 oder 13, wobei die Folie ferner mindestens eine Kernschicht beinhaltet, gebildet aus einer Zusammensetzung, die ein Polymer beinhaltet, das aus Polyamid, Polyester oder Polyolefin ausgewählt ist.

**15.** Artikel gemäß einem der Ansprüche 11-14, wobei der Artikel eine Oberflächenenergie von gleich oder größer als 0,037 N/m (37 dyn/cm) aufweist.

**Revendications**

**1.** Une composition comprenant au moins les éléments suivants :

A. de 95 à 99,5 % en poids rapporté au poids de la composition (à l'exclusion du poids pour tous additifs et/ou charges quelconques présents) d'un polymère à base d'oléfine ;
B. un polymère formé à partir d'au moins un monomère comprenant au moins un hétéroatome, ou modifié par au moins un agent comprenant au moins un hétéroatome ; et
C. un polymère à bloc polyalkylène (PA)-bloc polyalkylène glycol (PAG) dans laquelle A, B et C sont séparés et distincts les uns des autres.

**2.** La composition de la revendication 1, dans laquelle le polymère à bloc (PA)-bloc (PAG) du Constituant C est representé par la structure suivante :

$$R_1\text{-(A)n-(OA)m-OR}_2,$$

dans laquelle

OA est une unité oxyalkylène,
A est une unité alkylène,
$R_1$ est l'hydrogène ou un groupe alkyle,
$R_2$ est l'hydrogène ou un groupe alkyle,
m va de 4 à 220, et
n va de 4 à 220.

**3.** La composition de la revendication 1 ou de la revendication 2, dans laquelle le Constituant C a un point de fusion (Tm) allant de 70 à 110 °C tel que déterminé par l'ASTM D-127.

**4.** La composition de n'importe lesquelles des revendications précédentes, dans laquelle le Constituant A est sélectionné parmi un homopolymère de polyéthylène, un interpolymère d'éthylène/alpha-oléfine, un homopolymère de polypropylène, un interpolymère de propylène/éthylène, ou un interpolymère de propylène/alpha-oléfine.

**5.** La composition de la revendication 4, dans laquelle le polymère à base d'éthylène du Constituant A a une masse volumique allant de 0,900 à 0,950 g/cm$^3$.

**6.** La composition de la revendication 4 ou de la revendication 5, dans laquelle le polymère à base d'éthylène du Constituant A a un indice de fluidité à chaud (I$_2$) allant de 0,5 à 6 g/10 min (190 °C/2,16 kg).

**7.** La composition de la revendication 1 ou de la revendication 2, dans laquelle le Constituant A est un polymère à base de propylène.

**8.** La composition de la revendication 7, dans laquelle le polymère à base de propylène du Constituant A a une masse volumique allant de 0,860 à 0,900 g/cm$^3$.

**9.** La composition de la revendication 7 ou de la revendication 8, dans laquelle le polymère à base de propylène du Constituant A a un indice de fluidité à l'état fondu (MFR) allant de 0,2 à 10 g/10 min (230 °C/2,16 kg).

**10.** La composition de n'importe lesquelles des revendications 1 à 9, dans laquelle le polymère du Constituant B est sélectionné parmi des polyalkylène glycols, des polymères à base d'oléfine modifiés par greffage, un interpolymère d'éthylène et d'acétate de vinyle, un interpolymère d'éthylène et d'acide acrylique, un interpolymère d'éthylène et d'acétate d'éthyle, un interpolymère d'éthylène et d'acide méthacrylique, un ionomère d'éthylène et d'acide méthacrylique, un polycarbonate, un polyuréthane, un polyamide, l'acide polylactique, un copolymère bloc de polyéther, un polymère de copolyester, des polymères blocs de polyester/polyéther, un interpolymère d'oléfine et de monoxyde de carbone, un terpolymère d'éthylène/acide acrylique/monoxyde de carbone, un terpolymère d'éthylène/acide méthacrylique/monoxyde de carbone, un terpolymère d'éthylène/acétate de vinyle/monoxyde de carbone, un copolymère de styrène/monoxyde de carbone, le polyéthylène téréphtalate, le polyéthylène chloré, et des mélanges de deux de ces polymères ou plus.

**11.** Un article comprenant au moins un constituant formé à partir de la composition de n'importe lesquelles des revendications 1 à 10.

**12.** L'article de la revendication 11 sous la forme d'un film.

**13.** L'article de la revendication 12 dans lequel le film comprend au moins deux couches, et dans lequel au moins une couche extérieure du film est formée à partir de la composition de n'importe lesquelles des revendications 1 à 10.

**14.** L'article de la revendication 12 ou de la revendication 13 dans lequel le film comprend en outre au moins une couche centrale formée à partir d'une composition comprenant un polymère sélectionné parmi un polyamide, un polyester ou une polyoléfine.

**15.** L'article de n'importe lesquelles des revendications 11 à 14, l'article ayant une énergie de surface supérieure ou égale à 0,037 N/m (37 dynes/cm).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4251584 A
- US 4888391 A
- US 4945005 A
- US 4946896 A
- US 6093496 A
- WO 9722655 A
- WO 2001058987 A
- WO 2002042530 A
- WO 20060189735 A
- WO 2006217490 A
- WO 2008034716 A
- US 5883188 A
- WO 9001521 A
- EP 0515203 A
- EP 0748846 A2
- US 3520861 A
- US 4988781 A
- US 4599392 A
- US 5384373 A
- US 4340563 A
- US 4663220 A
- US 4668566 A
- US 4322027 A
- US 4413110 A
- US 3485706 A
- PL 26500101
- PL 26500102

### Non-patent literature cited in the description

- Surfactant Science Series. *Alkylene Oxides and Their Polymers,* vol. 35
- **D. M. BIGG et al.** Effect of Copolymer Ratio on the Crystallinity and Properties of Polylactic Acid Copolymers. *ANTEC,* vol. 96, 2028-2039
- **WILLIAMS ; WARD.** J. Polym. Sci. *Polym. Let.,* 1968, vol. 6, 621
- **MOUREY ; BALKE.** Chromatography Polym. 1992
- **BALKE ; THITIRATSAKUL ; LEW ; CHEUNG ; MOUREY.** Chromatography Polym. 1992
- **ZIMM, B.H.** *J. Chem. Phys.,* 1948, vol. 16, 1099
- **KRATOCHVIL, P.** Classical Light Scattering from Polymer Solutions. Elsevier, 1987